# EUROPEAN PATENT SPECIFICATION

(11) **EP 0 298 840 B1**
(45) Date of publication and mention of the grant of the patent: **24.03.1993**
(21) Application number: 88401694.0
(22) Date of filing: 30.06.1988
(51) Int. Cl.: G11B 5/70, G11B 5/66

(54) **Magnetic recording medium and manufacturing method thereof**
Magnetischer Aufzeichnungsträger und dessen Herstellungsverfahren
Support d'enregistrement magnétique et sa méthode de fabrication

(30) Priority: 09.07.1987 JP 172219/87
(43) Date of publication of application: 11.01.1989
(73) Proprietor: FUJITSU LIMITED, Kawasaki-shi, Kanagawa 211 (JP)
(72) Inventor: Wakamatsu, Hiroaki, Yokohama-shi Kanagawa 245 (JP); Mitobe, Yoshihiro, Nagano-shi Nagano 380 (JP); Kiuchi, Katsumi, Kanagawa 243-04 (JP)
(74) Representative: Levesque, Denys

(56) References cited:
- EP-A- 0 216 610
- WO-A-86/05214
- DE-A- 3 707 522
- Patent Abstracts of Japan, vol. 11, no. 72 (P-554)(2519), 5th March 1987
- Patent Abstracts of Japan, vol. 9, no. 236 (P-390)(1959), 21st September 1985

## Description

### BACKGROUND OF THE INVENTION

### 1. Field of the Invention

The present invention relates to a magnetic recording medium used in a magnetic disk drive and a manufacturing method thereof, and more particularly to a magnetic recording medium which has a large residual magnetization and high coercive force and such that a high signal to noise ratio is realized when used in the magnetic disk drive.

### 2. Description of the Prior Art

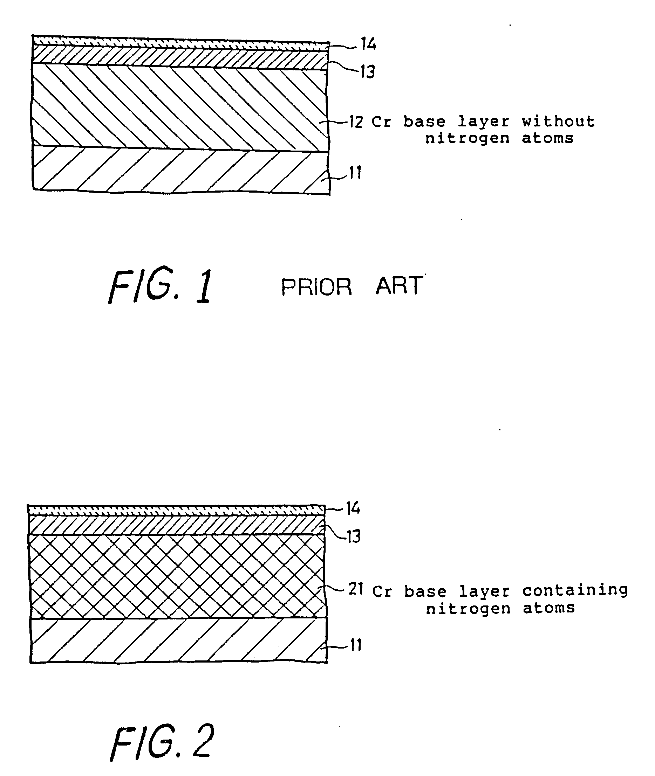

In the prior art, it is known that a structure of a magnetic film cobalt alloy such as a cobalt-nickel (Co-Ni) alloy or cobalt-nickel-chromium (Co-Ni-Cr) alloy, deposited on a chromium base layer formed on a substrate, is a suitable magnetic recording medium having high residual magnetization and high coercivity for a magnetic disk drive use. A cross section thereof is shown in Fig. 1, wherein a substrate 11 of an aluminium alloy or a hard glass is used, and Cr base layer 12, then magnetic film 13 of Co-Ni or Co-Ni-Cr alloy, and finally cover layer 14 are laminated one by one. Cover layer 14 is of carbon (C), silicon oxide, etc. and serves both as lubricating and protective layer. Sputtering technology using an argon gas is generally used in forming the above multilayer structure.

The representative data of the above magnetic recording medium using Co-Ni alloy for magnetic film are shown in the following table 1.

**Table 1**

| | |
|---|---|
| Coercivity Hc | 48 kA/m (600 Oe) |
| Residual Magnetization Br | 1.3 tesla (13000 gauss) |
| Squareness Ratio Sq (Bs/Br) | 0.9 |
| Signal to Noise Ratio S/N | 35-38 dB |

In Table 1, Bs denotes saturation magnetization, signal level S is measured as a reproduced peak to peak signal voltage for a record of isolated magnetic transitions, and noise N is measured as a rms (root mean square) noise voltage for a recording density of D_{50'} wherein D₅₀ is defined as the recording density at which the signal output is reduced to 50 % from the level for isolated magnetic transitions.

When the above data are compared with those for a sputtered γ-Fe₂O₃ magnetic thin film, the coercivity Hc is almost the same; however, residual magnetization Br data for the former is greatly increased. In case of γ-Fe₂O₃, Br data of about 0.25 tesla (2500 gauss) can be obtained. Therefore, a magnetic recording medium comprising a chromium base layer and a magnetic film of Co alloy has superior performances in obtaining a higher output and an easy application even for a magnetic disk drive of low speed. On the other hand, the S/N ratio data such as 35-38 dB for the Cr base layer and Co-Ni alloy magnetic film is lower than the data obtained for γ-Fe₂O₃ magnetic film, which shows a higher S/N ratio such as 46-48 dB.

### SUMMARY OF THE INVENTION

It is a general object of the invention, therefore, to provide a magnetic recording medium, and a manufacturing method thereof, having characteristics of high recording density, high output and low noise.

It is a more specific object of the invention to provide a magnetic recording medium having an improved S/N ratio characteristic, without deterioration of Hc, Br and Sq data obtained for the structure comprising Cr base layer and Co-Ni alloy magnetic film such as shown in Table 1.

It is another object of the invention to provide a method of manufacturing such a magnetic recording medium which is easy in production, with a small change in manufacturing process conventionally used.

These objects are achieved by using a magnetic recording medium according to the present invention, comprising a non-magnetic substrate, a nitrogen atoms containing Cr base layer deposited thereon and a magnetic film of Co alloy such as Co-Ni alloy or Co-Ni-Cr alloy, wherein the nitrogen atoms containing Cr base layer contains nitrogen atoms in an amount of less than 25 atm %.

Other objects and advantages of the present invention will become apparent from the detailed description to follow taken in conjunction with the appended claims.

### BRIEF DESCRIPTION OF THE DRAWINGS

Fig. 1 shows a cross section of a magnetic recording medium of the prior art,
Fig. 2 shows a cross section of a magnetic recording medium according to the present invention, having a similar cross section as shown in Fig. 1, but with a base layer different in composition,
Fig. 3 shows S/N ratio data and medium noise level versus nitrogen content in base layer, showing that a range of nitrogen content less than 25 atm %, according to the present invention, provides an improvement in noise characteristic,
Fig. 4 illustrates a curve showing the grain size change of Cr crystal due to the introduction of nitrogen atoms in base layer,
Fig. 5 through 8 illustrates the results of AES analysis for the composition of magnetic recording mediums containing nitrogen in Cr base layer in amounts of 0, 10, 30 and 40 atm % respectively, and
Figs. 9 and 10 show a cross section of a magnetic recording medium at two stages of fabrication, in order to explain the manufacturing method of the present invention, wherein Fig. 9 shows the cross section after formation of base layer and Fig. 10 after formation of magnetic film.

### DETAILED DESCRIPTION OF THE PREFERRED EMBODIMENTS

Fig. 2 is a cross section, partly shown, of the magnetic recording medium according to the present invention. A substrate 11 in a material such as aluminium alloy, or hard glass, having a thickness of about 1-3 mm is used. On the substrate 11, according to the invention, Cr base layer 21 containing an amount of nitrogen atoms less than 25 atm % is deposited in a thickness of about 300 nm (3000 Å). Then, a magnetic film 13 of Co alloy such as Co-Ni, Co-Ni-Cr, etc. is deposited in a thickness of about 50 nm (500 Å). Other alloy material such as Co-Ni-Mo, Co-Ni-Pt, and Co-Ni-W can be used also. Cover layer 14 of, for example, carbon having a thickness of 30 nm (300 Å) is finally deposited thereon. This cover layer 14 serves as a protecting and also lubricating medium. Other material such as silicon dioxide (SiO₂) and zirconium oxide (ZrO) may be used for the cover layer 14. The details of the method of forming the above laminated structure is explained later.

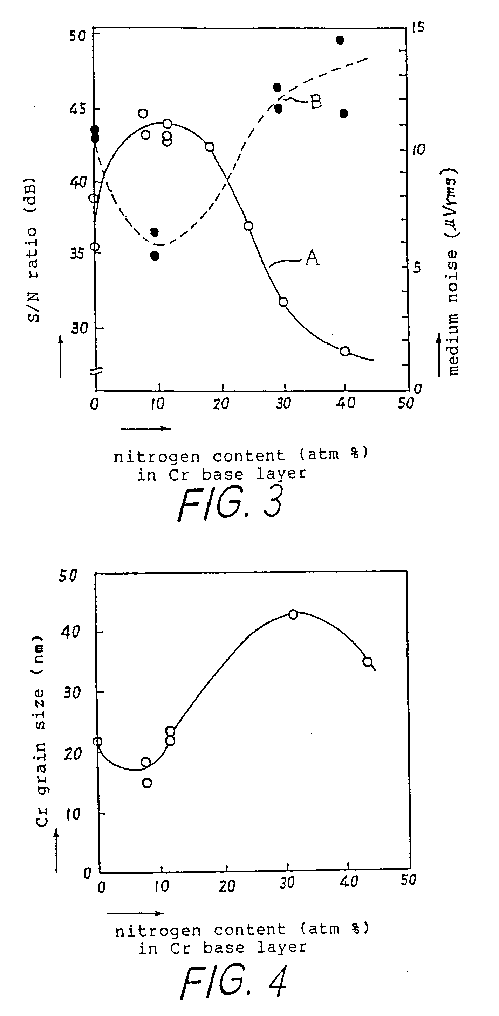

Varying the content of nitrogen atoms in Cr base layer 21, a plurality of test disks are made and their noise characteristics are measured. The magnetic film of Co-Ni alloy is used for the test disks. The data are illustrated in Fig. 3, wherein the abscissa shows atom percentage in Cr base layer, the left ordinate shows S/N ratio data for a solid curve A and the right ordinate shows a medium noise level for a dashed curve B. Here, the medium noise is defined as total noises of modulation noise and DC erase noise (defined as a residual noise component of a recording medium after it is subjected to a DC erasing magnetic field, the magnetic field being formed by a direct current flowing a coil winding and having a fixed direction), excluding the noise originating from a measuring circuit, a magnetic head, etc.

The S/N ratio data of curve A shows a remarkable increase and decrease characteristic in a range of nitrogen atom content between 0 and 25 atm %, having a peak value of about 44 dB at 10-11 atm %, which means an improvement of 6 to 9 dB. The peak also corresponds to a minimum noise level of curve B, wherein the medium noise level is reduced to 6 µV from 11 µV rms without nitrogen atoms. Two curves of Fig. 3 also show that S/N and noise data deteriorate rapidly in a range over nitrogen content of about 25 atm %, where the data are worse than those for the structure without an introduction of nitrogen atoms. In an actual application, S/N ratio higher than about 42 dB is more preferable; therefore, nitrogen content in a range from 5 to 15 atm % is a preferable region for the noise reduction. For other magnetic characteristics such as residual magnetization Br, coercivity Hc and squareness ratio Sq, similar data are obtained over a wide range of nitrogen atom content.

Some reasons are thinkable for the noise reduction by introduction of nitrogen atoms in Cr base layer. First, the grain size of Cr crystal is measured by X-ray diffraction method when changing the mixing ratio of nitrogen gas into argon gas during sputtering process of Cr base layer. The mixing ratio of nitrogen gas is changed between 0 and 10 %, which corresponds to a content of nitrogen atoms ranging between 0 and 40 atm % in Cr base layer. The grain size data are shown in Fig. 4, wherein the grain size t is obtained from the following relation :

$\text{t = 0.9 λ/B cos ϑ,}$

where λ denotes wavelength of X-ray; B, half value breadth of diffracted X-ray in radian; and ϑ, Bragg angle in radian.

As seen from the curve in Fig. 4, the grain size of Cr base layer decreases gradually in the range less than 10 atm % nitrogen content (10 atm % nitrogen content is formed using a mixing ratio of 0.5 to 1.0 % of nitrogen gas into argon gas) and then increases gradually in a range over 10 atm %, having a minimum around 10 atm % content. This curve shows the phenomena that, when nitrogen atoms are added in Cr base layer, the grain size of base layer decreases gradually, reaches to the minimum and thereafter gradually increases when the nitrogen content increases. Noise data for the smaller grain size shows a lower noise level.

However, the noise reduction cannot be made clear with the grain size theory only. Noise tests are conducted for several kinds of disks having a different grain size of Cr base layer using a pure argon gas. The noise level does not show a clear dependency on the grain size such as observed in Figs. 3 and 4. However, for the pure Cr base layer without nitrogen atoms, the absolute noise level is about twice as high as the level which can be obtained by sputtering Cr in a mixed gas of 99.5 % argon and 0.5 % nitrogen.

Another reason for noise reduction has been sought and further analysis on laminar composition versus the depth from the medium surface has been conducted using Auger Electron Spectroscopy (AES) method. Ion etching on the surface of test disk and AES measurement have been alternately conducted for several kinds of disks having different nitrogen atom contents in base layer.

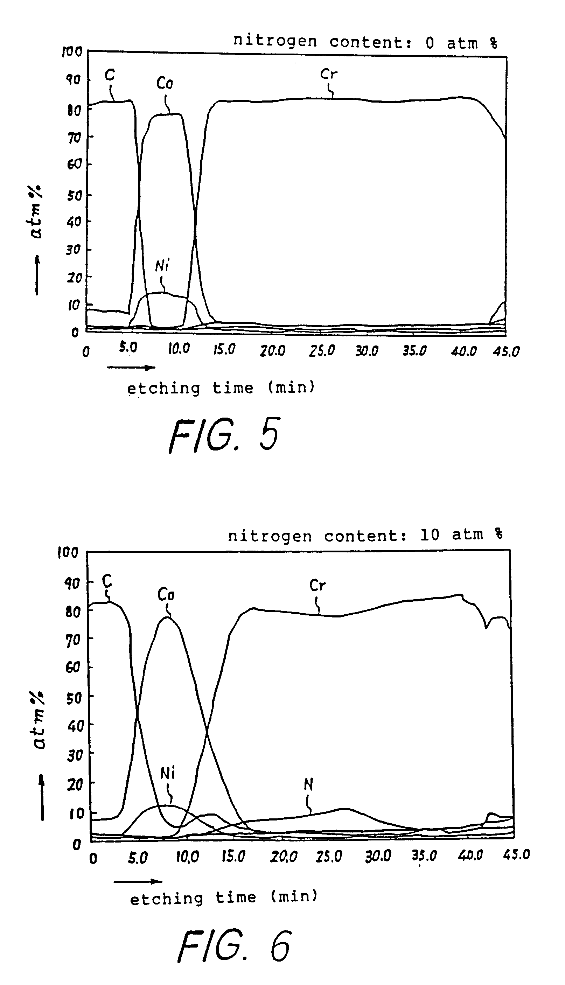

The representative test results are shown in Figs. 5 through 8. The abscissa shows total etching time from the start, which is almost proportional to the depth from the initial medium surface, and the ordinate shows the content of each element in atm %. These figures show that the three layers, i.e., carbon cover layer, magnetic film of Co-Ni, and Cr base layer containing nitrogen atoms, have two interface zones each between two adjacent laminated layers. In the interface zones, the content of each of the component elements gradually increases or decreases, which is considered as resulting from a mutual diffusion taking place during the sputtering processes.

Fig. 5 shows the data for the test disk, wherein no nitrogen gas is introduced during the sputtering process of Cr base layer. On the other hand, Figs. 6, 7, and 8 show the representative data for test disks, wherein nitrogen atoms are introduced in Cr base layer during Cr sputtering process with 10, 30, and 40 atm % nitrogen contents respectively. Here 10, 30, and 40 atm % nitrogen contents in Cr base layer can be obtained using a mixed gas of argon and nitrogen having a ratio of (99.5:0.5), (95:5), and (90:10) respectively.

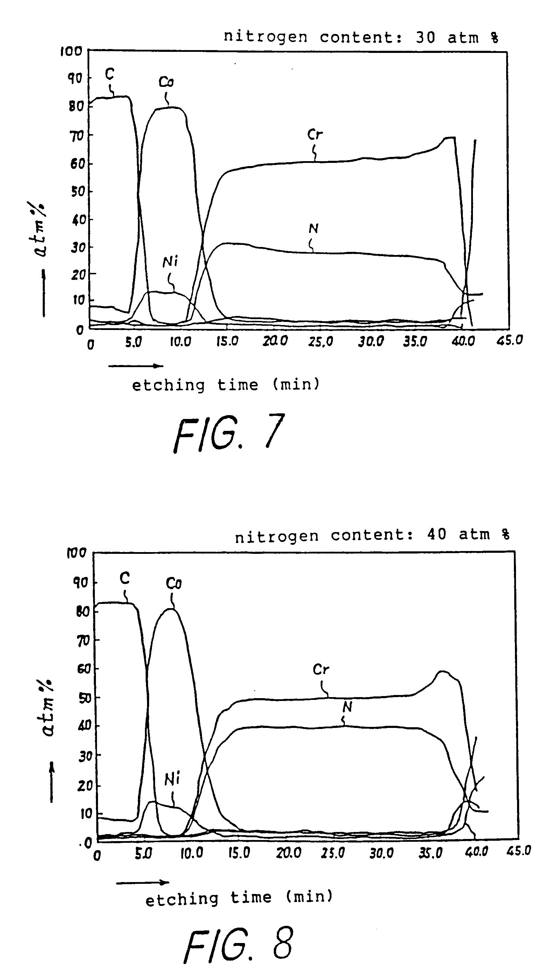

Comparing Co and Cr curves with each other in Figs. 5 through 8, Co and Cr curves of Fig. 6, which corresponds to a content of 10 atm % nitrogen in base layer, show the gentlest slope among the four figures. Next follow those of Fig. 7, which is for 30 atm % nitrogen content. Though the difference in slope is not so distinct, this gentle change of Co and Cr contents in the interface zone has a certain effect on a reduction of the noise level, together with the effect of grain size previously explained.

Logical analysis of noise reduction due to the grain size or the laminar composition change only, or the combination of both analyses, does not give a clear theory for the noise reduction. Sometimes, an aggregation of small crystal grains of magnetic material shows almost a monocrystal-like behavior, magnetically forming a magnetic domain which emphasizes the noise level. In case of 10 atm % nitrogen content in Cr base layer such as shown in Fig. 6, Cr atoms, deeply diffused into the magnetic film of Co-Ni, play an important role to prevent the growth of crystal aggregation in the magnetic film. On the other hand, when nitrogen content is increased around or above 30 atm %, grain size of Cr crystal itself grows much larger than in the case of nitrogen content of 10 atm %, reducing the output level and resulting in lowering the S/N level.

Taking all the above factors into consideration, the magnetic recording medium according to the present invention has a structure comprising a nitrogen atoms containing Cr base layer with a nitrogen content less than 25 atm %, preferably in a range from 5 to 15 atm %, and a magnetic film of Co alloy such as Co-Ni and Co-Ni-Cr; this structure has remarkable merits in reducing the noise level and obtaining a high S/N ratio.

The method of fabricating the magnetic recording medium such as shown in Fig. 2 will be explained hereinafter in more detail. A non-magnetic substrate 11 having a circular disk shape is fixed on a holder in a vacuum chamber of a sputtering apparatus, facing a Cr target electrode. As for the substrate, aluminium alloy having an alumite or nickel plated surface, or hard glass is used. The chamber of the apparatus is exhausted to a vacuum of about 6.7 x 10⁻⁵ Pa (5 x 10⁻⁷ torr). A vacuum degree higher than 1.3 x 10⁻⁴ Pa (1 x 10⁻⁶ torr) is preferable to prevent impurity gas atoms from being included in a subsequently sputtered layer.

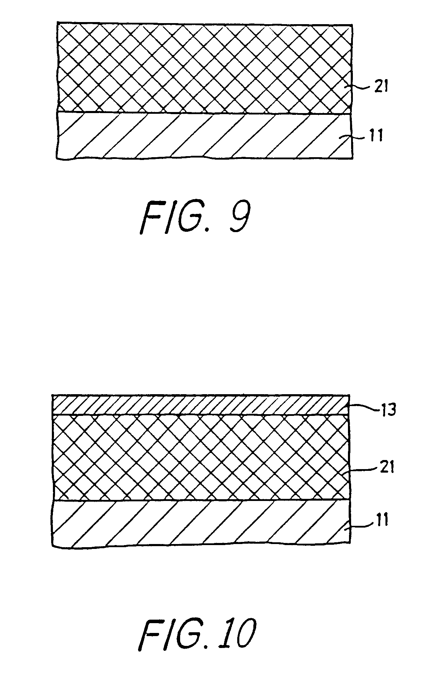

Then, a mixed gas of argon and nitrogen is introduced, and its flow rate is maintained at 4 Pa (30 x 10⁻³ torr) in the chamber, the mixing ratio of argon and nitrogen being kept as 99.5 : 0.5. High frequency power of 1 kW is supplied to the Cr target electrode, and Cr metal is sputtered on the substrate, thereby nitrogen atoms being taken in Cr metal layer. The growth rate under these conditions is approximately 90 nm/min (900 Å/min), and base layer 21 is deposited up to a thickness of 300 nm (3000 Å). Thus, Cr base layer 21 with a nitrogen content of 10 atm % is formed on substrate 11. The mixing ratio of nitrogen gas in a range of 0.5 to 1.0 % is preferable for obtaining nitrogen content of around 10 atm % in Cr base layer. A cross section thereof is illustrated in Fig. 9.

The position of the substrate is moved to another position facing a Co alloy target in the chamber, namely a Co-Ni alloy target, and the flow of the mixed gas is stopped. The degree of vacuum is again increased up to 6.7 x 10⁻⁵ Pa (5 x 10⁻⁷ torr). Thereafter, pure argon gas is introduced with a pressure of 4 Pa (30 x 10⁻³ torr) in the chamber. In a similar way as for base layer 21, Co-Ni alloy is sputtered above the substrate with a growth rate of 90 nm/min (900 Å/min). As shown in Fig. 10, magnetic film 13 of Co-Ni alloy with a thickness of 50 nm (500 Å) is thus formed on base layer 21.

According to the present invention, the vacuum should not be broken after the formation of base layer 21, and switchover steps to the subsequent Co-Ni sputtering process is conducted in vacuum condition. The time for switchover steps of moving the substrate, exhausting the mixed gas, introducing a pure argon gas at a specified pressure, etc. is performed within five minutes, preferably less than three minutes, and a vacuum degree in switchover steps higher than 1.3 x 10⁻⁴ Pa (1 x 10⁻⁶ torr) is preferable in order to avoid contamination by impurity gas and deterioration of coercivity Hc of the finished recording medium.

Finally, cover layer 14 for protection and lubrication is deposited on magnetic film 13 by a sputtering method. As target material for the cover layer, carbon, silicon oxide or zirconium oxide is used. The same sputtering can be used for this purpose, moving the substrate to another position facing the target. Depending on the situation, the process of forming cover layer 14 may be performed in another sputtering apparatus, once the substrate has been taken out from the chamber used so far. By depositing the cover layer having a thickness of 30 nm (300 Å), the magnetic recording medium of the present invention is completed, which is shown in Fig. 2.

The magnetic recording medium comprising nitrogen atoms containing Cr base layer containing less than 25 atm % nitrogen shows a clear improvement in medium noise level and S/N ratio. In case of 5 to 15 atm % nitrogen content, S/N ratio higher than 42 dB can be obtained. For the nitrogen content of about 10 atm %, the medium noise level is reduced by half and the S/N ratio is improved by 6 to 9 dB compared with those of the prior art having a Cr base layer without nitrogen introduction. The magnetic recording medium, comprising Cr base layer which contains nitrogen atoms, has the other merit of increasing the hardness of the base layer, which contributes to increasing the durability thereof.

This invention may be practiced or embodied in still other ways without departing from the essential characteristics thereof. For instance, while in the preferred embodiments, a hard disk substrate is used, the invention may be embodied for a flexible disk or a magnetic tape using magnetic film of Co alloy such as Co-Ni or Co-Ni-Cr. Additionally, the method of forming the Cr base layer containing nitrogen atoms and the magnetic film thereon can be replaced by other deposition methods. The preferred embodiments described herein are therefore illustrative and not restrictive, the scope of the invention being indicated by the appended claims, and all changes which come within the meaning of the claims are therefore to be embraced therein.

## Claims

1. A magnetic recording medium comprising a non-magnetic substrate, a nitrogen atoms containing Cr base layer deposited on said substrate, and a magnetic film of Co alloy formed on said base layer, wherein said Cr base layer contains nitrogen atoms in an amount less than 25 atm %.

2. A magnetic recording medium according to claim 1, wherein said Co alloy is one of the alloys selected from the group of Co-Ni, Co-Ni-Cr, Co-Ni-Mo, Co-Ni-Pt, and Co-Ni-W alloy.

3. A magnetic recording medium according to claim 1, wherein said nitrogen atom content is in a range from 5 atm % to 15 atm %.

4. A magnetic recording medium according to claim 1, wherein said magnetic recording medium further comprises a cover layer.

5. A magnetic recording medium according to claim 1, wherein said base layer and said magnetic film are formed by a sputtering process.

6. A magnetic recording medium according to claim 5, wherein said base layer and said magnetic film are formed under a continuous vacuum condition without exposing said substrate surface to the ambient atmosphere.

7. A magnetic recording medium according to claim 5, wherein said sputtering process of Cr base layer is performed using a mixed gas of argon and nitrogen, the mixing ratio of nitrogen being less than 5 %.

8. A magnetic recording medium according to claim 7, wherein said mixing ratio of nitrogen is in a range from 0.5 % to 1.0 %.

9. A method of manufacturing a magnetic recording medium, comprising a non-magnetic substrate, a nitrogen containing Cr base layer formed on said substrate, and a magnetic film of Co alloy formed on said base layer, said method comprising sequential steps of :
(a) forming said base layer by sputtering a Cr target on said substrate in a vacuum chamber in which is introduced a mixed gas of argon and nitrogen at a reduced pressure, the mixing ratio of nitrogen gas being less than 5 %,
(b) removing said mixed gas and evacuating the vacuum chamber, and
(c) forming said magnetic film by sputtering a Co alloy target above said substrate in an argon gas atmosphere at a reduced pressure.

10. A method of manufacturing a magnetic recording medium according to claim 9, wherein said step (b) is performed within a time of five minutes.

11. A method of manufacturing a magnetic recording medium according to claim 9, wherein said method further comprises step (d) of evacuating the vacuum chamber before starting said step (a).

12. A method of manufacturing a magnetic recording medium according to claim 11, wherein vacuum degree in steps (d) and (b) is higher than 1.3 x 10⁻⁴ Pa (1 x 10⁻⁶ torr).

13. A method of manufacturing a magnetic recording medium according to claim 9, wherein said mixing ratio in step (a) is in a range from 0.5 % to 1.0%.

## Patentansprüche

1. Ein magnetisches Aufzeichnungsmedium mit einem nichtmagnetischen Substrat, einer Stickstoffatome enthaltenden Cr-Grundschicht, die auf dem genannten Substrat abgeschieden ist, und einem Magnetfilm aus einer Co-Legierung, der auf der genannten Grundschicht gebildet ist, bei dem die genannte Cr-Grundschicht Stickstoffatome in einer Menge von Weniger als 25 Atom-% enthält.

2. Ein magnetisches Aufzeichnungsmedium nach Anspruch 1, bei dem die genannte Co-Legierung eine der Legierungen ist, die aus der Gruppe bestehend aus Co-Ni-, Co-Ni-Cr-, Co-Ni-Mo-, Co-Ni-Pt- und Co-Ni-W-Legierungen ausgewählt ist.

3. Ein magnetisches Aufzeichnungsmedium nach Anspruch 1, bei dem der genannte Stickstoffatomgehalt in einem Bereich von 5 Atom-% bis 15 Atom-% liegt.

4. Ein magnetisches Aufzeichnungsmedium nach Anspruch 1, welches magnetische Aufzeichnungsmedium ferner eine Deckschicht umfaßt.

5. Ein magnetisches Aufzeichnungsmedium nach Anspruch 1, bei dem die genannte Grundschicht und der genannte Magnetfilm durch ein Zerstäubungsverfahren gebildet sind.

6. Ein magnetisches Aufzeichnungsmedium nach Anspruch 5, bei dem die genannte Grundschicht und der genannte Magnetfilm unter einer andauernden Vakuumbedingung gebildet sind, ohne die genannte Substratoberfläche der Umgebungsatmosphäre auszusetzen.

7. Ein magnetisches Aufzeichnungsmedium nach Anspruch 5, bei dem das genannte Zerstäubungsverfahren der Cr-Grundschicht unter Verwendung eines gemischten Gases aus Argon und Stickstoff ausgeführt wird, wobei das Mischverhältnis von Stickstoff weniger als 5 % beträgt.

8. Ein magnetisches Aufzeichnungsmedium nach Anspruch 7, bei dem das genannte Mischverhältnis von Stickstoff in einem Bereich von 0,5 % bis 1,0 % liegt.

9. Ein Verfahren zum Herstellen eines magnetischen Aufzeichnungsmediums, das ein nichtmagnetisches Substrat, eine Stickstoff enthaltende Cr-Grundschicht, die auf dem genannten Substrat gebildet ist, und einen Magnetfilm aus einer Co-Legierung, der auf der genannten Grundschicht gebildet ist, umfaßt, welches Verfahren die aufeinanderfolgenden Schritte umfaßt:
(a) Bilden der genannten Grundschicht durch Zerstäuben eines Cr-Targets auf dem genannten Substrat in einer Vakuumkammer, in die ein gemischtes Gas aus Argon und Stickstoff bei einem reduzierten Druck eingeleitet wird, wobei das Mischverhältnis von Stickstoffgas weniger als 5 % beträgt;
(b) Entfernen des genannten gemischten Gases und Evakuieren der Vakuumkammer, und
(c) Bilden des genannten Magnetfilms durch Zerstäuben eines Co-Legierungstargets über dem genannten Substrat in einer Argongasatmosphäre bei einem reduzierten Druck.

10. Ein Verfahren zum Herstellen eines magnetischen Aufzeichnungsmediums nach Anspruch 9, bei dem der genannte Schritt (b) innerhalb einer Zeit von fünf Minuten ausgeführt wird.

11. Ein Verfahren zum Herstellen eines magnetischen Aufzeichnungsmediums nach Anspruch 9, bei dem das genannte Verfahren ferner den Schritt (d) des Evakuierens der Vakuumkammer vor Beginn des genannten Schrittes (a) umfaßt.

12. Ein Verfahren zum Herstellen eines magnetischen Aufzeichnungsmediums nach Anspruch 11, bei dem der Vakuumgrad bei den Schritten (d) und (b) höher als 1,3 x 10⁻⁴ Pa (1 x 10⁻⁶ Torr) ist.

13. Ein Verfahren zum Herstellen eines magnetischen Aufzeichnungsmediums nach Anspruch 9, bei dem das genannte Mischverhältnis bei Schritt (a) in einem Bereich von 0,5 % bis 1,0 % liegt.

## Revendications

1. Support d'enregistrement magnétique comprenant un substrat non magnétique, une couche de base de Cr contenant des atomes d'azote et déposée sur ledit substrat, et une pellicule magnétique d'alliage de Co formée sur ladite couche de base, où ladite couche de base de Cr contient des atomes d'azote en une quantité inférieure à 25 atomes pour 100 (atm %).

2. Support d'enregistrement magnétique selon la revendication 1, où ledit alliage de Co est un alliage sélectionné dans le groupe d'alliages Co-Ni, Co-Ni-Cr, Co-Ni-Mo, Co-Ni-Pt, et Co-Ni-W.

3. Support d'enregistrement magnétique selon la revendication 1, où la teneur en atomes d'azote est comprise dans l'intervalle de 5 atm% à 15 atm%.

4. Support d'enregistrement magnétique selon la revendication 1, où ledit support d'enregistrement magnétique comprend en outre une couche de revêtement.

5. Support d'enregistrement magnétique selon la revendication 1, où ladite couche de base et ladite pellicule magnétique sont formées par un processus de pulvérisation.

6. Support d'enregistrement magnétique selon la revendication 5, où ladite couche de base et ladite pellicule magnétique sont formées dans des conditions d'application continue de vide sans que ladite surface du substrat soit exposée à l'atmosphère ambiante.

7. Support d'enregistrement magnétique selon la revendication 5, où ledit processus de pulvérisation de la couche de base de Cr s'effectue à l'aide d'un mélange gazeux d'argon et d'azote, le rapport de mélange de l'azote étant inférieur à 5 %.

8. Support d'enregistrement magnétique selon la revendication 7, où ledit rapport de mélange de l'azote est compris dans l'intervalle de 0,5 % à 1,0 %.

9. Procédé de fabrication d'un support d'enregistrement magnétique, comprenant un substrat non magnétique, une couche de base de Cr contenant de l'azote qui est formée sur ledit substrat, et une pellicule magnétique d'alliage de Co formée sur ladite couche de base, ledit procédé comprenant les opérations suivantes :
(a) former ladite couche de base par pulvérisation d'une cible de Cr sur ledit substrat dans une chambre à vide dans laquelle est introduit un mélange gazeux d'argon et d'azote sous une pression réduite, le rapport de mélange du gaz azote étant inférieur à 5 %,
(b) retirer ledit mélange gazeux et faire le vide dans la chambre à vide, et
(c) former ladite pellicule magnétique par pulvérisation d'une cible d'alliage de Co au-dessus dudit substrat dans une atmosphère de gaz argon à une pression réduite.

10. Procédé de fabrication d'un support d'enregistrement magnétique selon la revendication 9, où on effectue ladite opération (b) en un temps inférieur à 5 min.

11. Procédé de fabrication d'un support d'enregistrement magnétique selon la revendication 9, où ledit procédé comprend en outre l'opération (d) consistant à faire le vide dans la chambre à vide avant que ladite opération (a) ne commence.

12. Procédé de fabrication d'un support d'enregistrement magnétique selon la revendication 11, où le degré de vide réalisé au cours des opérations (d) et (b) est supérieur à 1,3 x 10⁻⁴ Pa (1 x 10⁻⁶ torr).

13. Procédé de fabrication d'un support d'enregistrement magnétique selon la revendication 9, où le rapport de mélange de l'opération (a) est compris dans l'intervalle de 0,5 % à 1,0 %.
